# EUROPÄISCHE PATENTSCHRIFT

(11) **EP 1 251 069 B1**
(45) Veröffentlichungstag und Bekanntmachung des Hinweises auf die Patenterteilung: **29.09.2004**
(21) Anmeldenummer: 02008655.9
(22) Anmeldetag: 17.04.2002
(51) Int. Cl.: B64D 13/06, B64D 13/00, B64D 13/08

(54) **Stauluftkanal für eine Flugzeugklimaanlage**
Ram air duct for an aircraft air conditioning system
Conduit d'air sous pression dynamique pour système de conditionnement d'air d'avion

(30) Priorität: 20.04.2001 DE 10119433
(43) Veröffentlichungstag der Anmeldung: 23.10.2002
(73) Patentinhaber: Liebherr-Aerospace Lindenberg GmbH, 88161 Lindenberg/Allgäu (DE)
(72) Erfinder: Sauterleute, Alfred, 88178 Heimenkirch (DE); Haas, Joachim, 88239 Wangen (DE); Brutscher, Norbert, 88161 Lindenberg (DE); Hofer, Stefan, 88316 Isny (DE)
(74) Vertreter: Laufhütte, Dieter, Dr.-Ing.

(56) Entgegenhaltungen:
- EP-A- 1 138 592
- GB-A- 1 565 981
- US-A- 4 352 273
- US-A- 4 503 683
- US-A- 5 133 194

## Beschreibung

Die Erfindung betrifft einen Stauluftkanal für eine Flugzeugklimaanlage nach dem Oberbegriff des Anspruchs 1.

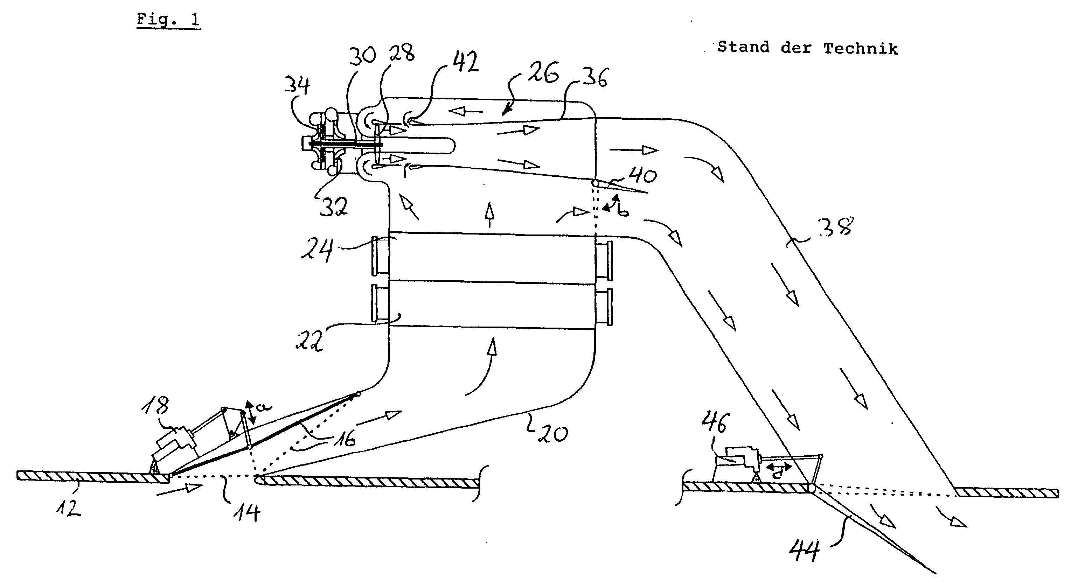

Derartige Stauluftkanäle für Flugzeugklimaanlagen sind bereits aus dem Stand der Technik bekannt. Ein schematischer Schnitt durch eine derartige bekannte Klimaanlage nach dem Stand der Technik ist in Figur 1 gezeigt. In der Flugzeughaut ist eine Einlaßöffnung 14 angeordnet, die über eine Einlaßklappe 16 verschließbar ist. Die Einlaßklappe ist über einen Einlaßaktuator 18 in Doppelpfeilrichtung a stufenlos verstellbar. An die Öffnung 14 schließt ein Einlaßkanal 20 an, in welchem Luft-Luft-Wärmetauscher 22 und 24 angeordnet sind. Der Einlaßkanal 20 mündet in eine Gebläsekammer 26 (Plenum). In der Gebläsekammer 26 ist ein Gebläserad 28 angeordnet. Das Gebläserad 28 ist auf einer Welle 30 angeordnet, auf der ebenfalls ein Verdichter 32 und eine Turbine 34 einer sogenannten Air-Cycle-Maschine der Flugzeugklimaanlage sitzen. Das Gebläserad 28 ist von einem Gebläseauslaßkanal 36 umschlossen, der in einen Auslaßkanal 38 mündet. Neben dem Gebläseauslaßkanal 36 ist in der Gebläsekammer 26 eine Bypass-Klappe 40 angeordnet, die in Doppelpfeilrichtung b verschwenkbar ist und durch entsprechendes Aufschwenken (vgl. Darstellung in der Figur 1) eine Bypass-Strömung in den Auslaßkanal 38 ermöglicht. In dem Gebläseauslaßkanal 36 ist eine sogenannte Jet-Pumpe 42 integriert.

Der Auslaßkanal ist über eine Auslaßklappe 44 verschließbar, wobei die Auslaßklappe 44 über einen Auslaßaktuator 46, der ein Gestänge in Doppelpfeilrichtung c bewegt, verschwenkbar ist.

Die Einlaßklappe 16 dient zur Kontrolle des Stauluftvolumenstroms, der über die Wärmetauscher 22 und 24 geleitet wird.

Neben der Kontrolle des Stauluftkanalvolumenstroms mit der Einlaßklappe müssen üblicherweise folgende drei Funktionene durch den Stauluftkanal erfüllt werden. Zum Kühlen im Flug muß ein Teil der Stauluft durch einen neben dem Gebläse angeordneten Bypass in nur einer Richtung geführt werden. Zum Heizen im Bodenbetrieb und zur Erzeugung der Kreisströmung muß zum Gebläse in Gegenrichtung ein Bypass ermöglicht werden und insgesamt muß eine gemeinsame Kontrolle des Gesamtvolumenstroms von Gebläse und Bypass gewährleistet werden.

Um diese Funktionen zu erfüllen, sind im Stauluftkanal nach dem Stand der Technik drei Vorrichtungen notwendig. Zunächst ist die Bypass-Klappe notwendig, die parallel zum Ventilator angeordnet ist. Abhängig vom anliegenden Druckverhältnis öffnet und schließt sich diese Klappe automatisch. Der Gebläsebypass erhöht die Durchlässigkeit des Stauluftkanals und somit den Gesamtvolumentstrom im Flug.

Als zweite Vorrichtung ist die Jet-Pumpe notwendig. Diese ist, wie in der Figur 1 gezeigt, parallel zum Gebläserad angeordnet. Abhängig von den Bedingungen, d.h. der Geschwindigkeit und dem Druck, ergibt sich am Jet-Pumpeneinlaß und -auslaß ein Volumenstrom in die eine oder andere Richtung bzw. nahezu kein Volumenstrom. Dabei werden von der Jet-Pumpe folgende drei Funktionen erfüllt:
1. Vermeidung einer Gebläse-Kreisströmung am Boden während des Kühlens,
2. Erzielung eines Bypass-Volumenstroms (zusätzlich zur obigen Bypass-Klappe) im Flug während des Kühlens, und
3. Ermöglichung einer Gebläsekreisströmung in Zusammenwirken mit einer weit geschlossenen Einlaßklappe und einer reduzierten Ventilatordrehzahl während des Heizbetriebs.

Als dritte Vorrichtung ist eine stufenlos bewegliche Auslaßklappe, die mittels eines elektrischen Antriebs und Gestänges verfahrbar ist, notwendig.

Nach dem Stand der Technik sind also zum Erfüllen der eingangs definierten drei Funktionen drei Vorrichtungen notwendig. Dies führt zu einigen in Kauf zu nehmenden Nachteilen.

So verursacht die Jet-Pumpe Leistungseinbußen von 5% bis 10% im Gebläseauslaßkanal. Durch die Mischungsverluste der Jet-Pumpe entstehen hohe Geräuschpegel. Die Heizleistung wird durch den relativ geringen Jet-Pumpenquerschnitt limitiert. Aufgrund von generellen Auslegungskriterien einer funktionierenden Jet-Pumpe ist der maximal realisierbare Querschnitt begrenzt, was somit die maximale Kreisströmung (umgekehrter Bypass-Volumenstrom) und somit auch die Heizleistung limitiert. Im Heizbetrieb reicht die Kreisströmung nicht aus, um die Stauluft-Einlaßklappe vollständig schließen zu können und somit die Kühlung über die Wärmetauscher vollständig zu unterbinden. Ein komplettes Schließen der Einlaßklappe bei zu geringer Umwälzströmung führt im Bodenbetrieb zum Pumpen des Gebläses, was unbedingt verhindert werden muß.

Durch die Bypass-Klappe, die als Rückschlagklappe ausgebildet ist, wird die Zuverlässigkeit der Vorrichtung signifikant reduziert. Zudem erhöhen sich die Herstellungskosten. Die Klappe ist großen zyklischen Belastungen ausgesetzt. Das zusätzliche Bauteil ist schwer zu integrieren und verursacht zusätzliches Gewicht, v.a. dadurch, daß es aus Metall ausgeführt werden muß. Ob ein Volumenstrom über die Bypass-Klappe zustande kommt, ist nur von den Druckbedingungen am Ein- und Auslaß abhängig. Eine gezielte Steuerung ist also nicht möglich.

Schließlich führt die zum Verschließen der gesamten Auslaßöffnung lang bauende Auslaßklappe im Flug zu hohen Lasten sowohl auf die Klappe als auch auf den Klappenantrieb. Neben dem hohen Gewicht der Klappe führen die notwendig hohen Motorleistungen auch zu einem entsprechend hohen Gewicht des Antriebs. Ein Blockieren der Auslaßklappe in geschlossener Position führt zum Totalausfall der Anlage, da beim Ausfall der Auslaßklappe in geschlossener Position kein Durchsatz mehr möglich ist.

Ein Stauluftkanal entsprechend dem Oberbegriff des Anspruchs 1 ist bereits aus der GB 1 565 981 A bekannt.

Aufgabe der Erfindung ist es, einen gattungsgemäßen Stauluftkanal für eine Flugzeugklimaanlage derart weiterzubilden, daß die Gebläsekreisströmung erhöht wird, um die Heizleistung zu verbessern. Gleichzeitig soll die Zuverlässigkeit der Vorrichtung bei Reduzierung der Gestehungskosten erhöht werden.

Erfindungsgemäß wird diese Aufgabe durch die Kombination der Merkmale des Anspruchs 1 gelöst. Demnach wird in dem gattungsgemäßen Stauluftkanal der Auslaßkanal in zwei getrennt verlaufende Kanäle unterteilt, von denen einer als Gebläseauslaßkanal bis zu dem Gebläse in die Gebläsekammer geführt ist und der andere ist als Bypass-Kanal ausgeführt, wobei die über einen Aktuator verschwenkbare Auslaßklappe im geschlossenen Zustand nur den Bypass-Kanal verschließt.

Der neue Stauluftkanal ermöglicht für den Heizbetrieb eine Gebläsekreisströmung bzw. Ansaugung aus dem Auslaßkanal und Umgebung in Zusammenwirken mit einer weit geschlossenen Einlaßklappe und einer reduzierten Gebläsedrehzahl. Es werden drei Funktionen mittels einer bereits vorhandenen Vorrichtung ausgeführt. Die gemäß dem Stand der Technik notwendige Bypass-Klappe und die Jet-Pumpe können entfallen. Die Anlage arbeitet zuverlässiger und die Heizleistung der Anlage ist verbessert, da keine Stauluft während des Heizbetriebs über die Wärmetauscher geführt werden muß. Somit ist die Heizleistung über die Auslaßklappe steuerbar und der Gebläsepumpschutz ist über eine entsprechende Steuerung anpassbar.

Die auf die Auslaßklappe wirkenden Lasten insbesondere während des Fluges werden deutlich reduziert, da die Auslaßklappe insgesamt kleiner baut. Die hier vorgesehenen zwei Leitungen ermöglichen eine höhere Flexibilität bei der Installation und insgesamt kann das Gesamtgewicht des Stauluftkanals reduziert werden.

Ausgestaltungen der Erfindung ergeben sich aus den sich an den Hauptanspruch anschließenden Unteransprüchen.

So kann der Gebläseauslaßkanal in seinem Auslaß ein Leitschaufelgitter aufweisen. Dieses Gitter verbessert die Abströmung und verhindert das Eindringen von unerwünschten Gegenständen in den Gebläseauslaßkanal.

Das Gebläserad kann derart angeordnet sein, daß es von der Stauluft in Richtung des Antriebs durchströmt wird (axiale Durchströmung).

Es kann aber auch so angeordnet sein, daß es entgegen der Richtung des Antriebs durchströmt wird (180°-Umlenkung).

Vorteilhaft kann ein Steuergerät zum getrennten Ansteuern der Einlaß- bzw. Auslaßklappe vorhanden sein. Hierdurch sind unterschiedliche Betriebszustände der Flugzeugklimaanlage einstellbar. So kann zum Kühlen des Flugzeuges am Boden die Einlaßklappe ganz oder teilweise geöffnet sein und die Auslaßklappe ganz geschlossen sein.

Zum Heizen am Boden kann die Einlaßklappe weit oder vollständig geschlossen sein und die Auslaßklappe ganz oder teilweise geöffnet sein.

Zum Kühlen im Flug kann die Einlaßklappe ganz oder teilweise geöffnet sein und die Auslaßklappe ganz oder teilweise offen sein.

Zum Heizen im Flug kann die Einlaßklappe weit oder vollständig geschlossen sein und die Auslaßklappe ganz oder teilweise offen sein. Die jeweilige Einstellung der Einlaß bzw. Auslaßklappe erfolgt durch das Steuergerät und einen elektrischen oder pneumatischen Antrieb.

Sollte die Auslaßklappe aufgrund eines Fehlers in geschlossener oder beinahe geschlossener Position feststehen, kann zum Kühlen im Flug mittels der Steuerung die Einlaßklappe zur teilweisen Kompensation weiter geöffnet werden.

Ist die Einlaßklappe fehlerhaft und in relativ weit geschlossener Position feststehend, kann zum Kühlen im Flug die Auslaßklappe zur teilweisen Kompensation weiter geöffnet werden.

Grundsätzlich können die Auslaßkanäle auch als separate Kanäle ausgeführt sein.

Das Gebläserad kann derart angeordnet sein, daß die geförderte Luft radial in eine Sammelleitung abströmt.

Der Gebläseauslaßkanal und der Bypass-Kanal liegen nebeneinander und sind durch eine gemeinsame Trennwand getrennt. Dabei kann die Trennwand bis zum Ende des Gebläseauslaßkanals und des Bypass-Kanals verlaufen. Die Trennwand kann aber auch verglichen zu der Länge des Gebläseauslaßkanals und des Bypass-Kanals kürzer ausgebildet sein. Hierdurch ergibt sich vorteilhaft, daß beim Heizen im Flug, wenn die Einlaßklappe vollständig oder beinahe vollständig geschlossen ist, bei geöffneter Auslaßklappe eine Umlaufströmung den Gebläseauslaßkanal und Bypass-Kanal einstellt, ohne daß diese Umlaufströmung durch die an der Flugzeugaußenhaut vorbeiströmende Luft unterbrochen wird.

Die Auslaßklappe kann auch als Auf-/Zu-Klappe ohne Regelung von Zwischenstellungen ausgeführt sein.

Weiterhin kann auch der Gebläseauslaßkanal zusätzlich mit einer separaten Klappe versehen sein.

Zur weiteren Heizleistungssteigerung kann zusätzlich eine Jet-Pumpe im Gebläseauslaßkanal integriert sein.

Der Antrieb für das Gebläserad kann nach einer Ausführungsvariante nur durch einen Motor erfolgen, wobei dieser Motor auch als Generator betrieben werden kann, wenn das Gebläserad durch die umströmende Stauluft angetrieben wird.

Alternativ kann als Antrieb für das Gebläse mindestens eine Turbine mit oder ohne Verdichterrad dienen.

Weitere Einzelheiten und Vorteile der Erfindung ergeben sich aus den in der Zeichnung dargestellten Ausführungsbeispielen. Es zeigen:
- Fig. 1:: eine schematische Schnittdarstellung eines Stauluftkanals für eine Flugzeugklimaanlage nach dem Stand der Technik,
- Fig. 2:: eine schematische Schnittdarstellung einer ersten Ausführungsvariante des erfindungsgemäßen Stauluftkanals,
- Fig. 3: eine schematische Schnittdarstellung einer zweiten Ausführungsvariante des erfindungsgemäßen Stauluftkanals und
- Fig. 4:: eine Detaildarstellung der Ausführungsvariante gemäß Fig. 3.

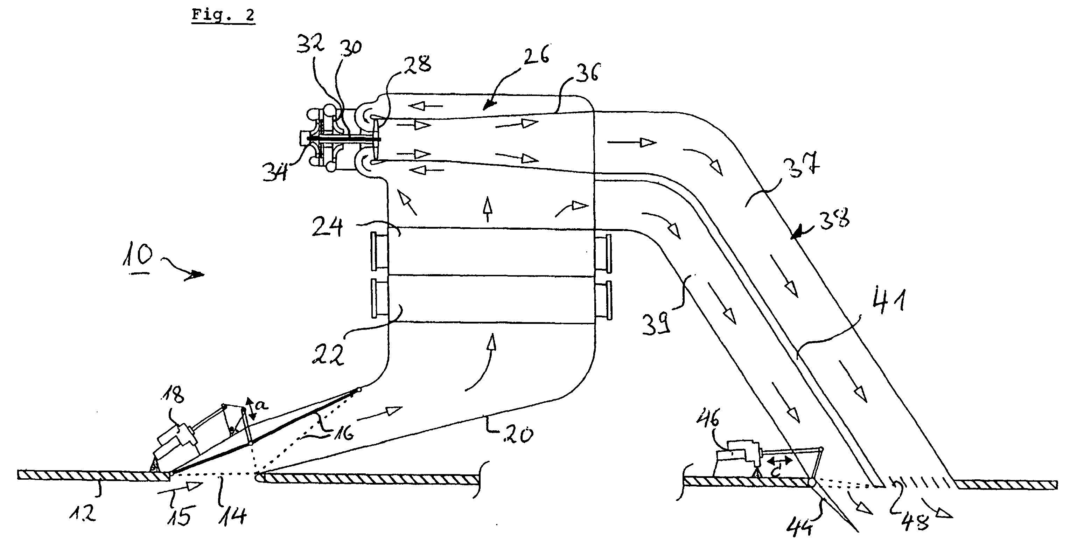

In der Ausführungsvariante des Stauluftkanals 10 gemäß Fig. 2 ist in der Flugzeugaußenhaut 12 eine Einlaßöffnung 14 vorgesehen, die über eine Einlaßklappe 16 verschließbar ist. Die Einlaßklappe 16 ist über einen elektrischen Antrieb 18 und ein daran anschließendes Gestänge in die Pfeilrichtung a verfahrbar. Die bei Öffnung der Klappe 16 in einen Einlaßkanal 20 einströmende Stauluft 15 durchströmt zwei hintereinander im Einlaßkanal angeordnete Luft-Luft-Wärmetauscher 22 bzw. 24, bevor sie in die Gebläsekammer 26 eintritt. In der Gebläsekammer ist ein Gebläserad 28 angeordnet, das neben einem Verdichter 32 und einer Turbine 34 auf einer Welle sitzt und so eine sogenannte Air-Cycle-Maschine bildet. Das Gebläserad 28 wird von einem Gebläseauslaßkanal 36 umgeben, der sich im Auslaßkanal 38 als gesonderter Kanal 37 fortsetzt. Der Auslaßkanal 38 ist in die beiden nebeneinander liegende Kanäle, nämlich den Gebläseauslaßkanal 37 und einen Bypass-Kanal 39 unterteilt. Die Kanäle 37 und 39 sind durch eine Trennwand 41 voneinander getrennt. Die Trennwand 41 setzt sich in der Ausführungsvariante gemäß Figur 2 bis zum Ende der parallel nebeneinander angeordneten Kanäle 37 und 39 fort. Der Bypass-Kanal 39 ist über eine Auslaßklappe 44, welche über einen Aktuator 46 verschwenkbar ist, verschließbar, wobei die Verschwenkung durch die Verstellung des Gestänges in Doppelpfeilrichtung c erfolgt. Das offene Ende des Gebläseauslaßkanals 37 ist über ein Leitschaufelgitter 48 verschlossen.

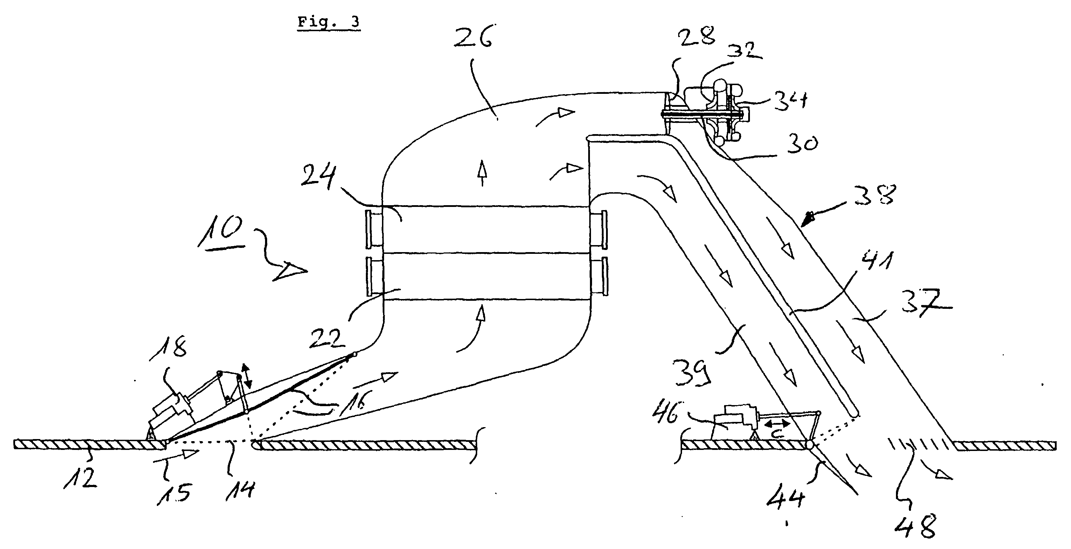

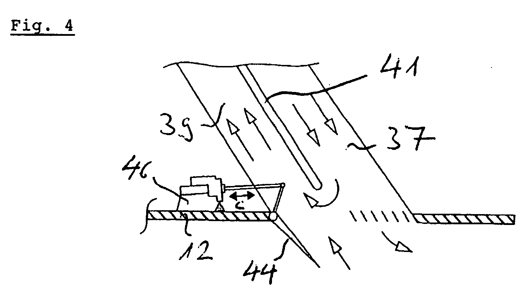

In Fig. 3 ist eine weitere Ausführungsvariante des erfindungsgemäßen Stauluftkanals gezeigt, die im wesentlichen der Ausführungsvariante gemäß Fig. 2 entspricht. Hier ist allerdings das Gebläserad 32 anders angeordnet, so daß hier die Stauluft nicht um 180° in der Gebläsekammer 26 umgelenkt werden muß, wie dies in der Ausführungsvariante gemäß Fig. 2 der Fall ist. Vielmehr wird die Stauluft in axialer Richtung des Antriebs des Gebläserades 28 angesaugt und in den Gebläseaustaßkanal 37 geleitet. Ein weiterer Unterschied in der Ausführungsvariante gemäß Fig. 3 besteht darin, daß die Trennwand 41 nicht bis zum Ende des Gebläseauslaßkanals 37 bzw. des Bypass-Kanals 39 geführt ist, sondern gegenüber der Flugzeugaußenhaut 12 zurückspringt. Hierdurch kann beim Heizbetrieb am Boden oder in der Luft, wie dies in der Figur 4 dargestellt ist, eine Umluftströmung erzeugt werden, die dazu führt, daß die aus dem Gebläseauslaßkanal strömende Luft im Bypass-Kanal wieder angesaugt wird, da die Einlaßklappe 14 geschlossen ist.

Die anhand der Ausführungsform in Figur 4 dargestellte Umluftströmung stellt sich auch beim Heizbetrieb am Boden oder in der Luft bei der Ausgestaltung gemäß Figur 2 ein. Hier wird allerdings eine zusätzliche Teilansaugung von Luft aus der Umgebung erwartet, da die Trennwand 41 bis zur Flugzeugaußenhaut 12 herausgezogen ist.

## Patentansprüche

1. Stauluftkanal(1) für eine Flugzeugklimaanlage mit einem durch eine Einlaßklappe (16) verschließbaren Einlaßkanal (20), in dem mindestens ein Wärmetauscher (22, 24) angeordnet ist, einem in einer Gebläsekammer (26) angeordneten Gebläse und einem durch eine Auslaßklappe verschließbaren Auslaßkanal (38),
**dadurch gekennzeichnet, dass**
der Auslaßkanal (38) in zwei getrennt verlaufende Kanäle (37, 39) unterteilt ist, von denen einer als Gebläseauslaßkanal (37) bis zu dem Gebläse in die Gebläsekammer geführt ist und der andere als Bypass-Kanal (39) ausgeführt ist, dass die über einen Aktuator (46) verschwenkbare Auslassklappe (44) in geschlossenem Zustand nur den Bypass-Kanal (39) verschließt, und daß der Gebläseauslaßkanal (37) und der Bypass-Kanal (39) nebeneinander liegen und durch eine gemeinsame Trennwand (41) getrennt sind.

2. Stauluftkanal nach Anspruch 1, **dadurch gekennzeichnet, daß** der Gebläseauslaßkanal (37) in seinem Auslaß ein Leitschaufelgitter (48) aufweist.

3. Stauluftkanal nach Anspruch 1 oder 2, **dadurch gekennzeichnet, daß** das Gebläserad (32) in Richtung seines Antriebs durchströmbar ist.

4. Stauluftkanal nach Anspruch 1 oder 2, **dadurch gekennzeichnet, daß** das Gebläserad (32) entgegen der Richtung seines Antriebs durchströmbar ist.

5. Stauluftkanal nach einem der Ansprüche 1 bis 4, **gekennzeichnet durch** ein Steuergerät zum getrennten Ansteuern der Einlaß (16)- bzw. Auslaßklappe (44).

6. Stauluftkanal nach einem der Ansprüche 1 bis 5, **dadurch gekennzeichnet, daß** der Gebläseauslaßkanal (37) und der Bypass-Kanal (39) als separate Leitungen geführt sind.

7. Stauluftkanal nach einem der Ansprüche 1-5, **dadurch gekennzeichnet, daß** die Trennwand (41) bis zum Ende des Gebläseauslaßkanals (37) und Bypass-Kanals (39) verläuft.

8. Stauluftkanal nach einem der Ansprüche 1-5, **dadurch gekennzeichnet, daß** die Trennwand (41) kürzer ist als der Gebläseauslaßkanal (37) und der Bypass-Kanal (39).

9. Stauluftkanal nach einem der Ansprüche 1 bis 7, **dadurch gekennzeichnet, daß** die von dem Gebläserad (32) geförderte Luft radial in eine Sammelleitung abströmt.

10. , Stauluftkanal nach einem der Ansprüche 1 bis 9, **dadurch gekennzeichnet, daß** der Gebläseauslaßkanal (37) mit einer separaten Klappe verschließbar ist.

11. Stauluftkanal nach einem der Ansprüche 1 bis 10, **dadurch gekennzeichnet, daß** im Gebläseauslaßkanal (37) zusätzlich eine Jet-Pumpe integriert ist.

12. Stauluftkanal nach einem der Ansprüche 1 bis 11, **dadurch gekennzeichnet, daß** der Antrieb für das Gebläserad (32) durch einen Motor antreibbar ist, wobei dieser auch als Generator betreibbar ist.

13. Stauluftkanal nach einem der Ansprüche 1 bis 11, **dadurch gekennzeichnet, daß** das GebJäserad (32) durch mindestens eine Turbine - mit oder ohne Verdichterrad ― antreibbar ist.

## Claims

1. Ram air duct (1) for an aircraft air-conditioning system, having an inlet duct (20) which can be closed off by an inlet flap (16) and in which there is arranged at least one heat exchanger (22, 24), a fan arranged in a fan chamber (26) and an outlet duct (38), which can be closed off by an outlet flap, **characterized in that** the outlet duct (38) is divided into two separately running ducts (37, 39), of which one, as fan outlet duct (37), is routed as far as the fan into the fan chamber and the other is designed as a bypass duct (39), **in that** the outlet flap (44), which can be pivoted by means of an actuator (46), in the closed position closes off only the bypass duct (39), and **in that** the fan outlet duct (37) and the bypass duct (39) are positioned next to one another and are separated by a common partition (41).

2. Ram air duct according to Claim 1, **characterized in that** the fan outlet duct (37) has a guide vane grating (48) in its outlet.

3. Ram air duct according to Claim 1 or 2, **characterized in that** medium can flow through the fan impeller (32) in the direction of its drive.

4. Ram air duct according to Claim 1 or 2, **characterized in that** medium can flow through the fan impeller (32) in the opposite direction to its drive.

5. Ram air duct according to one of Claims 1 to 4, **characterized by** a control unit for separately controlling the inlet flap (16) and outlet flap (44).

6. Ram air duct according to one of Claims 1 to 5, **characterized in that** the fan outlet duct (37) and the bypass duct (39) are routed as separate lines.

7. Ram air duct according to one of Claims 1-5, **characterized in that** the partition (41) runs all the way to the end of the fan outlet duct (37) and bypass duct (39).

8. Ram air duct according to one of Claims 1-5, **characterized in that** the partition (41) is shorter than the fan outlet duct (37) and the bypass duct (39).

9. Ram air duct according to one of Claims 1 to 7, **characterized in that** the air which is delivered by the fan impeller (32) flows out radially into a collection line.

10. Ram air duct according to one of Claims 1 to 9, **characterized in that** the fan outlet duct (37) can be closed off by a separate flap.

11. Ram air duct according to one of Claims 1 to 10, **characterized in that** a jet pump is additionally integrated in the fan outlet duct (37).

12. Ram air duct according to one of Claims 1 to 11, **characterized in that** the drive for the fan impeller (32) can be driven by a motor which can also be operated as a generator.

13. Ram air duct according to one of Claims 1 to 11, **characterized in that** the fan impeller (32) can be driven by at least one turbine, with or without a compressor impeller.

## Revendications

1. Conduit d'air sous pression dynamique (1) pour un système de conditionnement d'air d'avion comportant un conduit d'admission (20) pouvant être fermé par un volet d'admission (16) dans lequel est disposé au moins un échangeur thermique (22, 24), une soufflerie disposée dans une chambre de soufflerie (26) ainsi qu'un conduit de sortie (38) pouvant être fermé par un volet de sortie ;
**caractérisé en ce que** ;
le conduit de sortie (38) est divisé en deux conduits s'étendant séparément (37, 39) dont l'un, en tant que conduit de sortie de soufflerie (37) est étendu jusqu'à la soufflerie dans la chambre de soufflerie et l'autre est réalisé en tant que conduit de dérivation (39) **en ce que** le volet de sortie (44) pouvant être pivoté au moyen d'un actionneur (46) n'obture, dans son état fermé, que le conduit de dérivation (39), et **en ce que** le conduit de sortie de soufflerie(37) et le conduit de dérivation (39) sont contigus et sont séparés par une cloison de séparation commune (41).

2. Conduit d'air sous pression dynamique selon la revendication 1, **caractérisé en ce que** le conduit de sortie de soufflerie (37) comporte dans sa partie de sortie une grille d'aubes directrices (48).

3. Conduit d'air sous pression dynamique selon la revendication 1 ou 2, **caractérisé en ce que** la roue soufflante (32) permet une circulation d'air dans le sens de son entraînement.

4. Conduit d'air sous pression dynamique selon la revendication 1 ou 2, **caractérisé en ce que** la roue soufflante (32) permet une circulation d'air dans le sens inverse à son entraînement.

5. Conduit d'air sous pression dynamique selon l'une quelconque des revendications 1 à 4, **caractérisé par** un système de commande destiné à commander séparément le volet d'admission (16) et le volet d'évacuation (44).

6. Conduit d'air sous pression dynamique selon l'une quelconque des revendications 1 à 5, **caractérisé en ce que** le conduit d'évacuation de pompe (37) et le conduit de dérivation (39) sont réalisés sous la forme de conduits séparés.

7. Conduit d'air sous pression dynamique selon l'une quelconque des revendications 1 à 5, **caractérisé en ce que** la cloison séparatrice (41) s'étend jusqu'à l'extrémité du conduit de sortie de soufflerie (37) et du conduit de dérivation (39).

8. Conduit d'air sous pression dynamique selon l'une quelconque des revendications 1 à 5, **caractérisé en ce que** la cloison séparatrice (41) est plus courte que le conduit de sortie de soufflerie (37) et que le conduit de dérivation (39).

9. Conduit d'air sous pression dynamique selon l'une quelconque des revendications 1 à 7, **caractérisé en ce que** l'air pulsé par la roue soufflante (32) s'écoule radialement dans une conduite principale.

10. Conduit d'air sous pression dynamique selon l'une quelconque des revendications 1 à 9, **caractérisé en ce que** le conduit de sortie de soufflerie (37) peut être obturé par un volet séparé.

11. Conduit d'air sous pression dynamique selon l'une quelconque des revendications 1 à 10, **caractérisé en ce qu'**une pompe à jet est, en supplément, intégrée dans le conduit de sortie de soufflerie (37).

12. Conduit d'air sous pression dynamique selon l'une quelconque des revendications 1 à 11, **caractérisé en ce que** l'entraînement de la roue soufflante (32) peut être commandé par un moteur, moyennant quoi celui-ci peut être exploité en tant que générateur.

13. Conduit d'air sous pression dynamique selon l'une quelconque des revendications 1 à 11, **caractérisé en ce que** la roue soufflante (32) peut être entraînée au moyen d'au moins une turbine - avec ou sans roue de compresseur.
